# EUROPEAN PATENT SPECIFICATION

(11) **EP 1 203 213 B1**
(45) Date of publication and mention of the grant of the patent: **12.03.2008**
(21) Application number: 00947088.1
(22) Date of filing: 06.07.2000
(51) Int. Cl.: G01M 17/02

(54) **VIBRATION COMPENSATION SYSTEM FOR TIRE TESTING SYSTEMS**
SYSTEM ZUR SCHWINGUNGSKOMPENSATION FüR REIFENPRüFSYSTEME
SYSTEME DE COMPENSATION DE VIBRATIONS POUR SYSTEMES D'ESSAI DE PNEUS

(30) Priority: 09.07.1999 US 143007 P
(43) Date of publication of application: 08.05.2002
(73) Proprietor: Micro-Poise Measurement Systems, LLC, Akron OH 44305-4205 (US)
(72) Inventor: BEEBE, James, C., Brimfield, OH 44240 (US)
(74) Representative: Finnie, Peter John
(86) International application number: PCT/US2000/018568
(87) International publication number: WO 2001/002826

(56) References cited:
- WO-A-98/04897
- US-A- 4 489 607
- US-A- 5 103 595
- US-A- 5 313 023
- US-A- 5 614 676
- US-A- 6 035 709

## Description

### Technical Field

The present invention relates generally to tire testing of the type that measures tire uniformity and, in particular, to an improved method and apparatus for acquiring more accurate tire uniformity data so that some or all of the irregularities detected in the tire during the testing process can be corrected more precisely.

### Background Art

In the manufacture of tires, various irregularities and variations in the dimensions in the tires can arise. For example, dimensional irregularities can arise from inaccuracies in the molding process, changes in the characteristics of the materials and compounds employed in manufacturing the tires, inaccurate centering and variations in the vulcanization process, etc. All of the possible irregularities and variations in the tires, which can arise during manufacture, either singularly or through interaction with one another, can cause eccentricity, static and dynamic unbalance in the tire, and force variation which can result in tire vibration or noise during use.

It is possible to correct many of these irregularities by first measuring the tire variations and applying various corrective actions to the tire. To measure the variations, the tire is placed in a tire uniformity inspection machine. In currently available tire uniformity inspection machines, testing is fully automatic. Tires are fed by conveyor to a test station where each tire is mounted upon a chuck, inflated to a predetermined pressure and rotatably driven at a standard speed with its tread surface in abutting contact with the circumferential surface of a loadwheel. The loadwheel is instrumented with load cells that measure forces due to the tire acting on the loadwheel. The data gathered during the testing process may be used to grade the tire and/or to take immediate corrective action via shoulder and tread grinders, which selectively grind rubber from regions of the tire to compensate for the variations detected during the testing process. Alternately, or additionally, the data taken during the testing cycle may be used to mark specific regions of the tire to alert the installer to an area of interest, such as an irregularity or point of high force in the tire, which will enable the installer to take corrective or compensating action during the installation of the tire onto a wheel.

In a typical tire testing system the loadwheel is free to rotate about an axis parallel to the rotational axis of the tire. The loadwheel has spindles at its opposite ends provided with load cells which measure forces acting on the loadwheel in directions of interest. Precise measurement of the forces exerted by the tire permits accurate adjustment of the uniformity of the tire after the force measuring procedure, for example, by grinding devices which remove excess tire material to correct any irregularities that may have arisen during the manufacturing process.

An example of a tire testing system and a load wheel construction is described in US-A-6016695 and US-A-5988509 respectively. In these systems, the loadwheel spindles are provided with load cells that are secured to a movable carriage. The carriage is attached to a ball screw housed driven by a motor and gear reduction unit. Rotation of the screw shaft moves the ball screw and carriage toward or away from the tire being tested, the carriage sliding along the frame of the machine. A servomechanism moves the carriage to a desired position based on the force signals generated by the load cells.

Although prior art tire testing systems, and in particular known loadwheel assemblies used therewith, measure tire uniformity in an acceptable manner, several drawbacks exist so as to leave room for improvement. The loadwheel assembly (which includes a loadwheel, axle and bearings) is fairly heavy. As a result, the load cells receive and respond to the motion of the overall machine frame, as well as the forces produced by the rotating tire. The motions in the machine frame can be caused by external vibration, such as that produced by the traffic of industrial trucks near the machine or by vibrations internal to the machine, such as that produced by the operation of tire conveyors or grinders that form part of the testing machine.

The forces caused by these extraneous vibrations are undesirable, and represent errors in the measurement system. In prior art devices, attempts have been made to avoid these errors by having the tire testing machines installed on massive foundations or, alternately, sequencing the machines in a way that avoids actuating or moving the subassemblies of the machine (such as grinders) while measurements are being taken. These prior art methods have substantially added to the cost of the installation and have also increased the operating costs due to increased cycle time and reduced throughput of the machine.

Another technique is described in WO98/04897 in which additional load cells connected to a weight and matched to the load cells attached to the load wheel spindle are located on the machine frame adjacent the load wheel spindle. The output from these additional load cells is then subtracted from the output of the load cells attached to the load wheel spindle to compensate for the extraneous vibrations.

### Disclosure of the Invention

The present invention provides an improved method and apparatus for obtaining tire uniformity data of a tire being tested in a tire uniformity machine. In the preferred and illustrated embodiment, the apparatus includes a loadwheel assembly including a rotatable loadwheel. Load sensors or load cells for detecting forces imposed on the loadwheel by a tire being tested also form part of the assembly. One or more piezo-electric accelerometers for detecting vibrations in the loadwheel are also provided. The vibrations being monitored are generally caused by movements in the frame of the machine caused by industrial lift truck traffic in the vicinity of the machine or movement of components, such as conveyors and grinders within the machine itself. The signal or information obtained from the accelerometer is subtracted from the overall signal or data generated by the load cells in order to provide more precise tire uniformity data.

The disclosed apparatus reduces or eliminates the error that sometimes occurs in tire uniformity data measurements due to extraneous forces or vibrations that are received by the load cells during the testing of a tire.

In the illustrated embodiment, at least two accelerometers are used, one for detecting the lateral force component and one for detecting the radial force component. In a more preferred construction of the illustrated embodiment, two radial accelerometers are used, because due to existing componentry, a single radial accelerometer cannot be mounted in alignment with a radial plane of the loadwheel assembly. As a result, two symmetrically-spaced radial accelerometers are used.

In the illustrated embodiment, the signal generated by an accelerometer is communicated to a differential amplifier via a conditioning circuit and a scaler. The scaling factor used by the scaler is determined by the characteristics of the accelerometer being used. A signal from the load cells which represents the total force on the loadwheel is also communicated to the differential amplifier. The total force includes both forces generated by the tire being tested, as well as the forces generated by vibrations applied to the tire machine. The resuting net signal from the differential amplifier is one that more precisely reflects the actual tire uniformity data of the tire being measured.

Additional features of the invention will become apparent and fuller understanding obtained by reading the following detailed description in connection with the accompanying drawings.

### Brief Description of Drawings

Figure 1 is a fragmentary, side elevational view of a tire testing station and load wheel assembly constructed in accordance with a preferred embodiment of the invention;
Figure 2 is a fragmentary view of the load wheel assembly, portions of which are shown in section;
Figure 3 is a top plan view of the load wheel assembly shown in Figure 2;
Figure 4 is a block diagram illustrating a data acquisition method that compensates for erroneous lateral forces or lateral vibrations imparted to the test station and/or load wheel;
Figure 5 is a block diagram illustrating a data acquisition method that compensates for erroneous radial forces or radial vibrations; and
Figure 6 is sectional view of a load wheel constructed in accordance with a preferred embodiment of the invention.

### Best Mode for Carrying Out the Invention

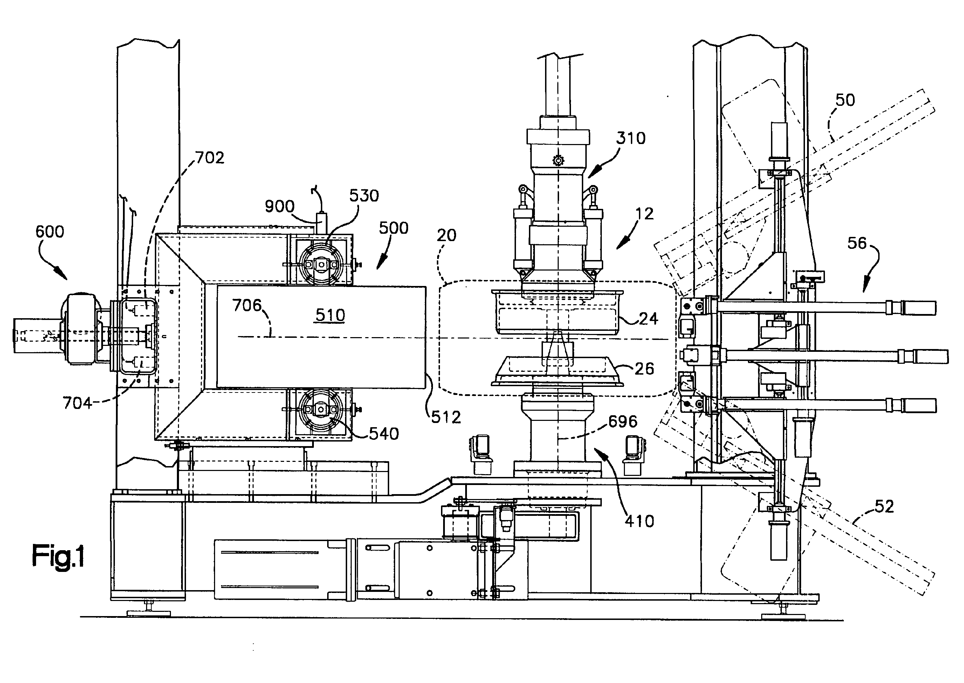

Figure 1 illustrates the overall arrangement of a tire uniformity machine that includes an apparatus for reducing the effects of erroneous vibrations on the measurement of force on a tire being tested. The overall tire uniformity machine is more fully described in US-A-6016695.

Referring to Figure 1, the tire testing system includes a testing station 12 where a tire is tested and optionally ground to adjust the roundness, mechanically uniformity and/or other physical properties of the tire. In Figure 1, a tire indicated by reference character 20 (shown in phantom) is delivered to the testing station 12 by a suitable conveyor such as the conveyor disclosed in US-A-6016695 so that the tire is clamped between lower and upper rims 24, 26 of a chuck apparatus. The rims 24, 26 form, respectively, part of a spindle assembly 410 and a moveable chuck assembly 310. The chuck apparatus may comprise an adjustable width chuck apparatus for a tire testing system that is disclosed in US-A-5992227.

The tire is clamped between the rims 24, 26 and inflated via the chuck apparatus. After inflation, a load wheel 510 forming part of a loadwheel assembly 500 is moved into abutting relationship with the outer surface of the tire 20. As is conventional, the tire is rotated against the load wheel 510 which monitors the load exerted by the tire via load cells 530, 540. As is known in the art, the data taken from the load cells is used to determine the uniformity of the tire. If desired, adjustments to the uniformity of the tire are made by one or more grinders, indicated generally by the reference characters 50, 52 (shown in phantom).

The tire testing system includes a probe system indicated generally by the reference character 56. A probe system suitable for use with the illustrated tire testing system is fully disclosed in US-A-6016695.

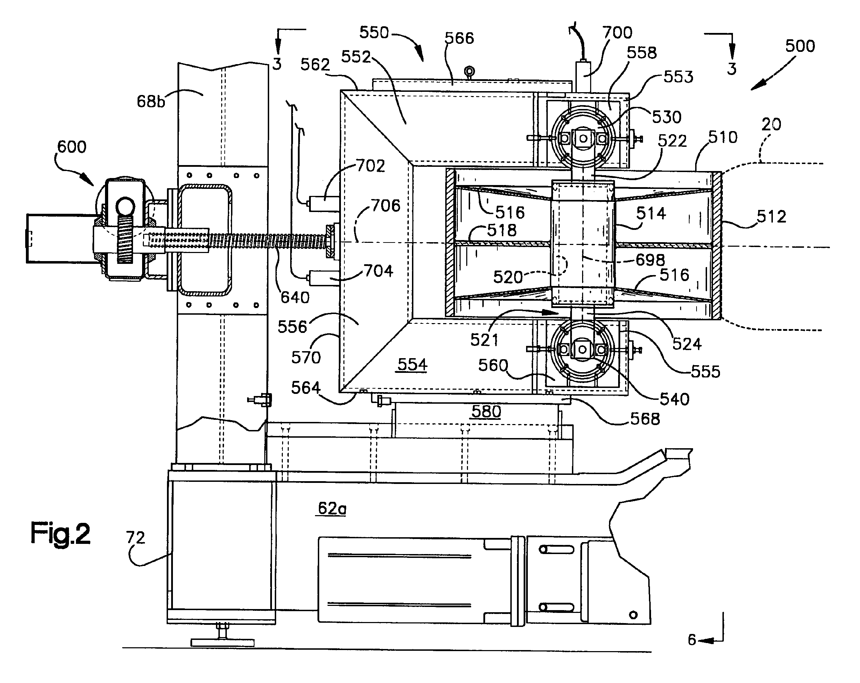

The load wheel assembly 500 may have various configurations. An example of a suitable load wheel assembly is disclosed in US-A-5988509. Referring also to Figure 2, the load wheel assembly 500 includes three main components, namely, a load wheel 510, C-shaped carriage 550 and a drive mechanism 600. The illustrated load wheel includes a cylindrical outer wall 512, the exterior of which contacts the rotating tire held by the chuck assembly, as is known in the art. The outer wall 512 of the load wheel 510 is connected to a hub 514 defining a hollow bore 520. Hub 514 is joined to the outer wall 512 by a plurality of solid annular disks 516, 518. In the illustrated embodiment of the load wheel, disk 516 are disposed between the hub 514 and outer wall 512 near the opposite ends thereof closing off the hollow interior of the load wheel, while disk 518 is disposed between the central portions of hubs 514 and wall 512.

Further details of the illustrative load wheel can be found in US-A-5988509.

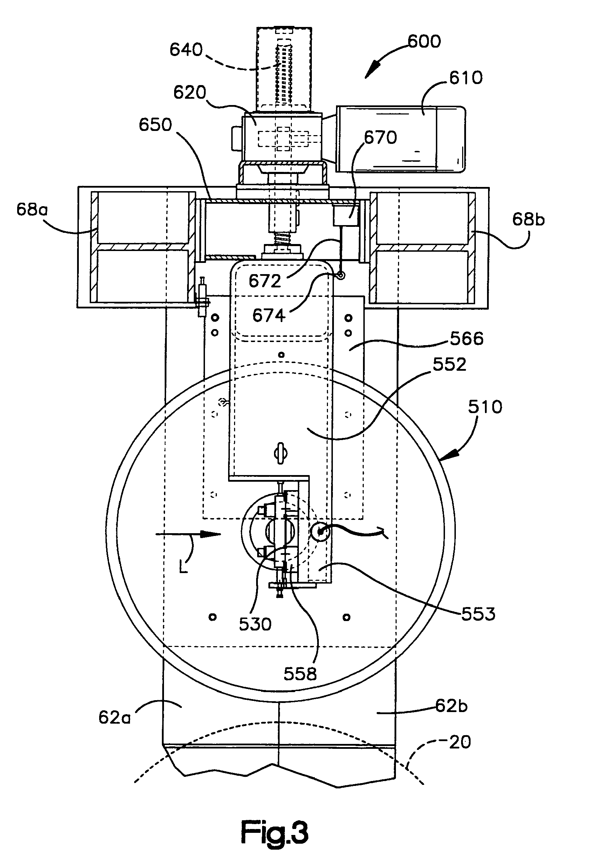

Turning in particular to Figures 2 and 3, a C-shaped carriage 550 is shown to include an upper horizontal leg 552, a lower horizontal leg 554 and a vertical connecting leg 556 extending there between. The end portions 553, 555 of carriage legs 552, 554 are formed to include step or recessed areas attached to (or alternatively formed integrally width) mounting pads 558, 560. Pads 558, 560 mount the spindle ends 522, 524 of a load wheel spindle 521 and the load cells 530, 540.

As seen in Figure 2, the C-shaped frame 552 is supported for sliding movement upon a base 62a. A drive mechanism 600 mounted to vertical frame pieces 68a, 68b (see Figure 3) affects motion in the carriage 552 towards and away from a tire 20 located in the testing station. The drive includes a ball screw 640 operatively connected to the load wheel frame 552 at its radial center. Details of the drive mechanism 600 can be found in US-A-5988509. The disclosed tire uniformity machine includes data acquisition apparatus that compensates for extraneous vibrations and/or forces transmitted to the load cells 530, 540 which would ordinarily represent errors in the measurement system. These extraneous vibrations may be the result of equipment movement in the vicinity of the tire testing system and could also be the result of the movement of componentry forming part of the tire testing station itself such as movement and operation of the grinders 52, 54 or the operation of various conveyors (not shown).

The present invention substantially reduces the effect of these extraneous vibrations on the measurement of force variation of the tire in the testing station 12. In accordance with the preferred embodiment of the invention, the apparatus comprises one or more transducers or other sensors that measure or monitor the vibration of the tire testing machine in terms of its acceleration. The system may also include scaling mechanisms to adjust the output of the vibration measurement transducers/sensors in order to precisely represent the force generated by the acceleration according to Newton's law of motion (F=ma). These forces which are derived from the measured vibrations and which would normally produce errors or erroneous data, are subtracted from the combined vibration induced force and the tire uniformity force measured by the load cells 530, 540. This results in data that more accurately represents the actual force variation in the tire.

Referring to Figures 1 and 2, the vibration compensating apparatus includes acceleration transducers strategically mounted on the load wheel assembly 500. In the illustrated embodiment, two components of the vibration force are separately monitored. Typically, the tire uniformity machine measures forces in the "radial" and "lateral" directions. The term "lateral" in the tire testing art is defined to refer to forces along the axis of rotation of the tire, in the direction lateral to a tire as it would be oriented on a vehicle. In the tire testing machine shown in Figures 1 and 2, the tire is oriented horizontally during the test and thus the "lateral" force is actually directed vertically as viewed in Figures 1 and 2. In other words, the lateral force component acts along a vector that is parallel to the axis of rotation (indicated by the reference character 696 in Figure 1) of the tire itself The radial component is defined to be along the axis connecting the center of rotation of the tire and the load wheel, and is also directed horizontally, i.e., parallel to a plane of rotation of the tire.

The lateral component of the vibrations is monitored by an accelerometer 700 that is mounted at or near the axis of rotation 696 for the load wheel 510. As seen in Figure 3, the actual mounting location for the lateral accelerometer 700 is offset to one side of the axis since in the illustrated construction, it is impossible to mount the accelerometer precisely on the rotational axis of the load wheel 510.

The radial component of the force is monitored by at least one accelerometer 702 mounted to the C-shaped carriage 552 of the load wheel assembly 500. In the illustrated embodiment, the carriage drive mechanism 600 is attached to the C-shaped carriage at its radial center. This makes it impossible for the accelerometer 702 to be located coincident with a center rotational plane indicated by the phantom line 706 for the load wheel 510. Accordingly, a pair of accelerometers 702, 704 are disposed on either side of the center plane and are symmetrically spaced about the axis to achieve the desired sensitivity to the force being monitored.

It should be noted that for accuracy, it is important that the acceleration measuring apparatus measure motion in the same direction that the motion of the mass causes the influence on the load cell measurement of force. In particular, uniformity machines are designed to be sensitive to the indicated forces, with very low sensitivity to the corresponding moment. If possible, the transducer for measuring acceleration should be mounted on a line which passes through the center of mass of the load wheel assembly in the desired measurement direction, i.e., lateral or radial. In some cases, this may not be possible, for lack of suitable mounting surfaces as is the case with the embodiment shown in Figure 2. In these cases, two transducers may be used, symmetrically spaced about the axis to achieve the desired sensitivity to the force while reducing sensitivity to the moment.

It should also be noted that in some cases it is desirable to measure moments on uniformity machines. In these cases, symmetrically spaced acceleration transducers can also be used, connected to be sensitive to the difference in the moment around the axis.

In the preferred and illustrated embodiment, acceleration transducers 700, 702 and 704 form part of a uniformity testing machine such as that is disclosed in US-A-6016695. In the illustrated system, the load wheel has a mass of approximately 340 pounds (154 kg) . Two biaxial load cells 530, 540 are used to measure radial and lateral force. The load cells in the illustrated embodiment are Lebow Model 6443-105, with a range of 500 pounds (69 N)in the lateral direction, and 2,000 pounds (276 N) in the radial direction. These cells are summed to provide a total range of 1,000 pounds (138 N) lateral and 4,000 pounds (552 N) radial.

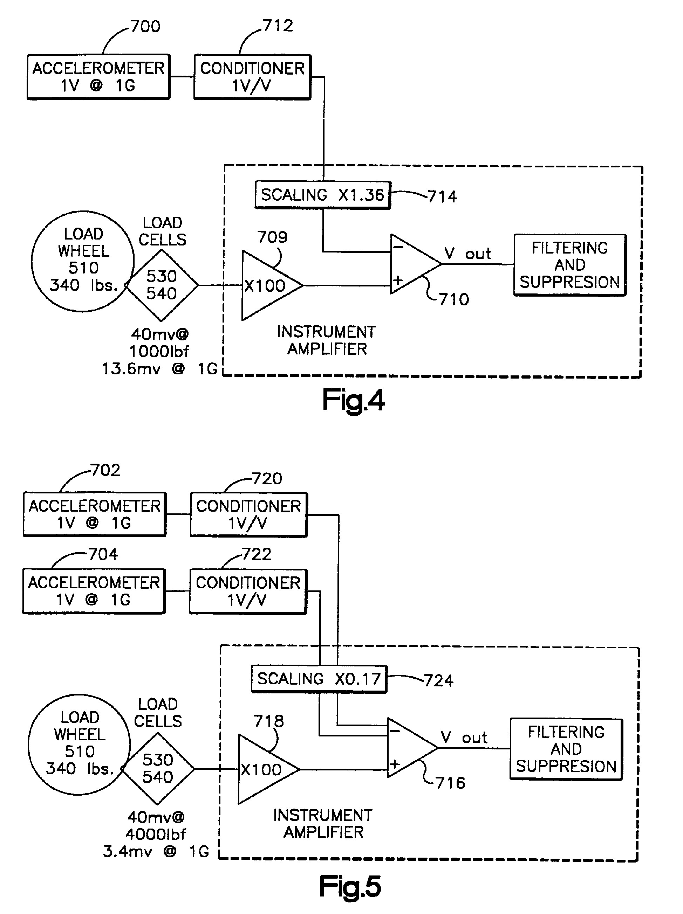

The load cell signals are processed by Akron Standard Instrument Amplifier Cards designated as model 440-0027-XX which are modified as shown in Figures 4 and 5. As seen in Figure 4, the lateral channel includes a Signal from the load cells 530, 540 which is amplified (by amplifier 709) and fed to a differential amplifier 710.. A signal from the accelerometer 700 is conditioned (by conditioning circuitry 712) and scaled (by a factor of 1.36) by a scaler 714 and also fed to the differential amplifier 710 which outputs a net signal that is representative of the actual force variation being measured in the tire being tested.

Referring now to Figure 5, the radial channel includes a signal received from the load cells 530, 540 communicated to another differential amplifier 716 via an amplifier 718. Acceleration related information is communicated by the accelerometers 702, 704 to the differential amplifier 716. The signals are conditioned and scaled (by signal conditioners 720, 722 and a scaler 724) and are summed with the load cell data resulting in data that does not include the radial force data generated by the erroneous vibrations.

It has been found that acceleration transducers denoted as PCB model 393A03 seismic accelerometers have produced satisfactory results. Signal conditioners known as PCB model 482A16 were used. The transducers 700, 702, 704 and the signal conditioners 720, 722 are available from PCB Piezotronics, Inc. of Depew N.Y. USA. As indicated above, accelerometer 700 for measuring the extraneous forces in the lateral direction is mounted to the top of the load carriage 552 substantially vertically above the center of mass of the load wheel 510. The accelerometers 702, 704 for the radial direction are mounted to the load wheel assembly symmetrically above and below the center of mass of the load wheel since the ball screw 640 (see Figure 2) which drives the load wheel carriage is located on the radial centerline.

As indicated above, the signals from the accelerometers 700, 702, 704 are scaled by scalers 714 andlor 724. The actual scaling factor for a given accelerometer, such as accelerometer 700, is determined by characteristics of the accelerometer itself The methodology for arriving at an appropriate scaling factor is set out below. In particular, the scaling factor which is shown as 1.36 in Figure 4 for the above-identified accelerometer 700 is derived as follows:

The scaling factor K₄ which is equal to 1.36 for the accelerometer 700 is thus used in the scaler 714.

Those skilled in the art will recognize that if alternate accelerometers are used, the above-identified methodology would be used to calculate the appropriate scaling factor. Those skilled in the art will also recognize how to apply this same methodology to arrive at the scaling factor for the radial accelerometers; namely accelerometers 702 and 704 which in the illustrated embodiment is 0.17.

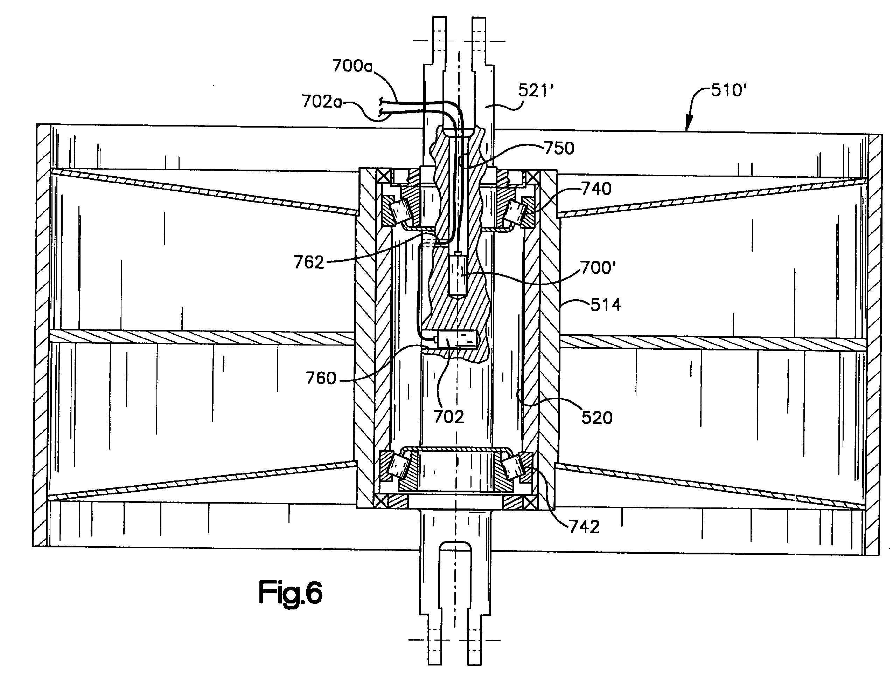

Figure 6 illustrates an alternate embodiment in which accelerometers are mounted to the load wheel spindle itself In particular, the load wheel 510' is rotatably supported on a fixed axle or spindle 521' by a pair of roller bearings 740, 742.. As seen in Figure 6, an accelerometer 700' for measuring force in the lateral direction is mounted within a center bore 750 formed in the spindle 521'. Electrical signal conductors 700a for the accelerometer 700' are fed from the bore 750 to a suitable controller (not shown) that contains the channel circuitry depicted in Figure 4.

A single accelerometer 702' for measuring forces in the radial direction is positioned in a diametrical bore 760 formed in the spindle 521'. Electrical signal carrying conductors 702a from the radial accelerometer 702' pass from the bore 760 along the outside of the axle 730 and enter the center bore 750 (in which the vertical accelerometer 700' is mounted) via a small cross bore 762. In the Figure 6 embodiment, the accelerometers 700', 702' are located precisely along the respective lateral and radial axes of the load wheel assembly and should provide highly accurate data signals that accurately reflect the lateral and radial accelerations imparted to the load wheel assembly by external forces such as vehicular traffic in the plant or internal component movement such as movement in conveyors or grinders.

## Claims

1. An apparatus for the measurement of force variation in a tire (20) being tested on a tire uniformity machine, comprising:
a) a loadwheel assembly (500) including a rotatable loadwheel (510) ;
b) load sensors (530, 540) for detecting forces imposed on said loadwheel (510) by a tire (20) being tested and producing an output;
c) one or more piezo-electric accelerometers (700, 702, 704) for detecting vibrations in said loadwheel (510) caused by forces other than the forces applied by said tire (20) and producing an output; and,
d) means (710, 716) for subtracting said output indicative of said vibration induced forces from said output indicative of said tire imposed forces whereby more precise tire uniformity data is obtained.

2. An apparatus according to claim 1, wherein said one or more accelerometers include:
i) a scaler (714, 724) for scaling a signal generated by said accelerometer; and wherein,
ii) said means (710, 716) for subtracting subtracts said scaled signal from a signal generated by said load cells (530, 540).

3. An apparatus according to claim 1 or 2, further including at least two accelerometers (700, 702, 704), a first of said accelerometers (700) for detecting vibrations that impose forces in a lateral direction defined as a direction that is parallel to an axis of rotation of said tire (20) and a second accelerometer (702, 704) for detecting vibrations that produce forces in a radial direction.

4. A tire uniformity machine comprising:
a) an apparatus in accordance with any one of the preceding claims
b) a tire testing station (12) including a tire holding device (340, 410) for holding and rotating a tire (20) in said tire testing station (12);
c) means for rotating (40) said tire (20) in said tire testing station (12);
d) means (600) for contacting said tire (20) with said loadwheel (510) and;
e) differential summing means for adjusting an output generated by said load sensors (530, 540) to remove any component caused by said vibration.

5. A tire uniformity machine according to claim 4, wherein said accelerometers (700, 702) are mounted within a spindle (521) about which said loadwheel (510) rotates, a lateral accelerometer (700) being located coincident with an axis of rotation defined by said spindle (521) and a radial accelerometer (702) being located on a diametral line of said spindle (521).

6. A method for the measurement of forces variation on a tire uniformity machine comprising the steps of:
a) providing a load wheel assembly (500) including a loadwheel (510) rotatively supported on a loadwheel frame (550) ;
b) providing load cells (530, 540) operatively connected to said loadwheel (510) to detect forces imposed on said loadwheel (510);
c) monitoring acceleration forces applied to said loadwheel (510) using piezo-electric accelerometer transducers (700, 702, 704); and,
d) subtracting data obtained from said accelerometer transducers (700, 702, 704) from overall load cell data to arrive at more precise tire uniformity data.

7. A method according to claim 6, further including the steps of scaling said signals generated by said accelerometers (700, 702, 704) and summing said signals in a differential amplifier (710, 716) to arrive at a net signal that does not include data related to said acceleration forces.

8. A loadwheel for use in a tire testing machine, comprising:
a) a loadwheel body (510) defining a cylindrical outer surface (512) at least a portion of which is contacted by a tire (20) being tested in a testing station (12);
b) a fixed spindle (512) defining an axis of rotation for said loadwheel body (510);
c) bearing means (740, 742) for rotatably supporting said loadwheel body (510) on said spindle (521); and,
d) at least one accelerometer (700, 702) mounted to said spindle (521) for detecting acceleration induced on said loadwheel (510) by forces other than forces generated by a tire (20) being tested.

9. A loadwheel of according to claim 8, further comprising a second accelerometer (702) mounted to said spindle, said first accelerometer (700) being located coincident with an axis of rotation defined by said spindle (512) and said second accelerometer (702) being located on a diametral line of said spindle (512).

10. A loadwheel according to claim 9, wherein said first accelerometer (700) is located within an axial bore (750) defined in said spindle (512).

11. A loadwheel according to claim 9 or 10, wherein said second accelerometer is located in a bore (760) aligned with said diametral line.

## Patentansprüche

1. Vorrichtung zur Messung der Kraftveränderung in einem Reifen (20), der auf einer Reifengleichförmigkeitsmaschine getestet wird, mit:
a) einer Lastradanordnung (500) mit einem drehbaren Lastrad (510);
b) Lastsensoren (530, 540) zum Detektieren von Kräften, die von einem Reifen (20), der getestet wird, auf das Lastrad (510) wirken, und zur Erzeugung eines Ausgangssignals;
c) einem oder mehreren piezoelektrischen Beschleunigungsmessern (700, 702, 704) zum Detektieren von Schwingungen im Lastrad (510), die durch andere Kräfte als diejenigen, die vom Reifen (20) herrühren, hervorgerufen werden, und zur Erzeugung eines Ausgangssignals; und
d) einem Mittel (710, 716) zum Subtrahieren des Ausgangssignals, das die schwingungsinduzierten Kräfte angibt, vom Ausgangssignal, das die vom Reifen ausgeübten Kräfte angibt, wodurch präzisere Reifengleichförmigkeitsdaten erhalten werden.

2. Vorrichtung nach Anspruch 1, wobei der eine oder die mehreren Beschleunigungsmesser umfassen:
i) eine Skaliervorrichtung zum Skalieren eines vom Beschleunigungsmesser erzeugten Signals; und wobei
ii) das Mittel (710, 716) zum Subtrahieren das skalierte Signal von einem Signal abzieht, das durch die Lastzellen (530, 540) erzeugt wird.

3. Vorrichtung nach Anspruch 1 oder 2, des Weiteren mit wenigstens zwei Beschleunigungsmessern (700, 702, 704), von denen ein erster (700) zur Detektion von Schwingungen dient, die Kräfte in einer seitlichen Richtung ausüben, die als eine Richtung definiert ist, welche parallel zu einer Drehachse des Reifens (20) ist, und von denen ein zweiter (702, 704) zur Detektion von Schwingungen dient, die Kräfte in einer radialen Richtung erzeugen.

4. Reifengleichförmigkeitsgerät mit:
a) einer Vorrichtung gemäß einem der vorangehenden Ansprüche;
b) einer Reifenteststation (12) mit einer Reifenhaltevorrichtung (340, 410) zum Halten und Drehen eines Reifens (20) in der Reifenteststation (12);
c) einem Mittel zum Drehen (40) des Reifens (20) in der Reifenteststation (12);
d) einem Mittel (600), das den Reifen (20) mit dem Lastrad (510) in Kontakt bringt; und
e) einem differenziellen Summationsmittel zum Anpassen eines Ausgangssignals, das von den Lastsensoren (530, 540) erzeugt wird, um jede Komponente zu entfernen, die durch die Schwingung hervorgerufen wird.

5. Reifengleichförmigkeitsgerät nach Anspruch 4, wobei die Beschleunigungsmesser (700, 702) an einer Spindel (521) montiert sind, um die sich das Lastrad (510) dreht, wobei ein seitlicher Beschleunigungsmesser (700) zusammenfallend mit einer Drehachse angeordnet ist, die durch die Spindel (521) definiert ist, und wobei ein radialer Beschleunigungsmesser (702) auf einer diametralen Linie der Spindel (521) angeordnet ist.

6. Verfahren zur Messung der Kraftveränderung auf einem Reifengleichförmigkeitsgerät mit folgenden Schritten:
a) Bereitstellen einer Lastradanordnung (500) mit einem Lastrad (510), das drehbar an einem Lastradrahmen (550) gelagert ist;
b) Bereitstellen von Lastzellen (530, 540), die wirkend mit dem Lastrad (510) verbunden sind, um Kräfte zu detektieren, die auf das Lastrad (510) ausgeübt werden;
c) Überwachen von Beschleunigungskräften, die auf das Lastrad (510) ausgeübt werden, unter Verwendung piezoelektrischer Beschleunigungsmesssignalgeber (700, 702, 704); und
d) Subtrahieren der Daten, die von den Beschleunigungsmesssignalgebern (700, 702, 704) erhalten wurden, von den gesamten Lastzellendaten, um zu präziseren Reifengleichförmigkeitsdaten zu gelangen.

7. Verfahren nach Anspruch 6, des Weiteren mit den Schritten, die von den Beschleunigungsmessern (700, 702, 704) erzeugten Signale zu skalieren und die Signale in einem differenziellen Verstärker (710, 716) zu summieren, um zu einem Nettosignal zu gelangen, das keine Daten enthält, die mit den Beschleunigungskräften zusammenhängen.

8. Lastrad zur Verwendung in einem Reifentestgerät mit:
a) einem Lastradkörper (510), der eine zylindrische Außenfläche (512) definiert, von der wenigstens ein Abschnitt mit einem Reifen (20), der in einer Teststation (12) getestet wird, in Berührung steht;
b) einer fixierten Spindel (512), die eine Drehachse für den Lastradkörper (510) definiert;
c) Lagermitteln (740, 742) zur drehbaren Lagerung des Lastradkörpers (510) auf der Spindel (521); und
d) wenigstens einem Beschleunigungsmesser (700, 702), der an der Spindel (521) befestigt ist, um Beschleunigungen zu detektieren, die durch andere Kräfte als diejenigen, die von einem getesteten Reifen (20) erzeugt werden, auf das Lastrad (510) einwirken.

9. Lastrad nach Anspruch 8, des Weiteren mit einem zweiten Beschleunigungsmesser (702), der an der Spindel befestigt ist, wobei der erste Beschleunigungsmesser (700) zusammenfallend mit einer Drehachse angeordnet ist, die durch die Spindel (512) definiert ist, und wobei der zweite Beschleunigungsmesser (702) auf einer diametralen Linie der Spindel (512) angeordnet ist.

10. Lastrad nach Anspruch 9, wobei der erste Beschleunigungsmesser (700) in einem axialen Loch (750) angeordnet ist, das in der Spindel (512) definiert ist.

11. Lastrad nach Anspruch 9 oder 10, wobei der zweite Beschleunigungsmesser in einem Loch (760) angeordnet, das fluchtend mit der diametralen Linie ausgerichtet ist.

## Revendications

1. Appareil qui effectue la mesure d'une variation de force dans un bandage de roue (20) testé sur une machine de test de l'uniformité d'un bandage de roue, qui comprend :
a) un ensemble (500) de roue de charge qui comprend une roue de charge (510) apte à tourner,
b) des détecteurs de charge (530, 540) qui détectent les forces exercées sur ladite roue de charge (510) par le bandage de roue (20) testé, ces détecteurs produisant une sortie,
c) au moins un accéléromètre piézo-électrique (700, 702, 704) qui détecte les vibrations de ladite roue de charge (510) provoquées par des forces autres que les forces appliquées par ledit bandage de roue (20), les accéléromètres produisant une sortie, et
d) des moyens (710, 716) qui soustraient ladite sortie desdites forces induites par vibration de ladite sortie qui indique lesdites forces exercées par le bandage de roue, ce qui permet d'obtenir des données plus précises concernant l'uniformité du bandage de roue.

2. Appareil selon la revendication 1, dans lequel ledit au moins un accéléromètre comprend :
i) un dispositif (714, 724) de mise à l'échelle qui met à l'échelle le signal formé par ledit accéléromètre et dans lequel,
ii) lesdits moyens (710, 716) de soustraction soustraient ledit signal mis à l'échelle du signal formé par lesdites cellules de charge (530, 540).

3. Appareil selon la revendication 1 ou 2, qui comprend de plus au moins deux accéléromètres (700, 702, 704), le premier desdits accéléromètres (700) détectant les vibrations qui exercent des forces dans une direction latérale définie comme étant la direction parallèle à l'axe de rotation dudit bandage de roue (20) et un deuxième accéléromètre (702, 704) qui détecte des vibrations qui exercent des forces dans la direction radiale.

4. Machine de test de l'uniformité d'un bandage de roue, qui comprend :
a) un appareil selon l'une quelconque des revendications précédentes,
b) un poste (12) de test de bandage de roue qui comprend un dispositif (340, 410) de maintien de bandage de roue qui maintient et fait tourner un bandage de roue (20) dans ledit poste (12) de test de bandage de roue,
c) des moyens de rotation (40) dudit bandage de roue (20) dans ledit poste (12) de test de bandage de roue,
d) des moyens (600) pour que la roue de charge (510) soit en contact avec ledit bandage de roue (20) et
e) des moyens différentiels de sommation qui ajustent la sortie délivrée par lesdits détecteurs de charge (530, 540) pour enlever toute composante provoquée par ladite vibration.

5. Machine de test de l'uniformité d'un bandage de roue selon la revendication 4, dans laquelle lesdits accéléromètres (700, 702) sont montés dans une broche (521) autour de laquelle ladite roue de charge (510) tourne, un accéléromètre latéral (700) étant situé à côté de l'axe de rotation défini par ladite broche (521) et un accéléromètre radial (702) étant situé sur le diamètre de ladite broche (521).

6. Procédé pour mesurer la variation de forces sur une machine de test de l'uniformité d'un bandage de roue, lequel procédé comprend les étapes qui consistent à :
a) prévoir un ensemble (500) de roue de charge qui comprend une roue de charge (510) soutenue à rotation sur un bâti (550) de roue de charge,
b) prévoir des cellules de charge (530, 540) reliées en fonctionnement à ladite roue de charge (510) pour détecter les forces exercées sur ladite roue de charge (510),
c) surveiller les forces d'accélération exercées sur ladite roue de charge (510) en utilisant des transducteurs (700, 702, 704) d'accéléromètres piézo-électriques et
d) soustraire les données desdits transducteurs (700, 702, 704) d'accéléromètre des données globales de la cellule de charge pour obtenir des données plus précises sur l'uniformité du bandage de roue.

7. Procédé selon la revendication 6, qui comprend de plus les étapes qui consistent à mettre à l'échelle lesdits signaux formés par lesdits accéléromètres (700, 702, 704) et additionner lesdits signaux dans un amplificateur (710, 716) différentiel pour obtenir un signal net qui ne comprend pas de données liées auxdites forces d'accélération.

8. Roue de charge destinée à être utilisée dans une machine de test de bandage de roue, qui comprend :
a) un corps (510) de roue de charge qui définit une surface externe cylindrique (512) dont au moins une partie est en contact avec le bandage de roue (20) testé dans un poste (12) de test,
b) une broche fixe (512) qui définit l'axe de rotation pour ledit corps (510) de la roue de charge,
c) des moyens (740, 742) de palier qui soutiennent ledit corps (510) de roue de charge en rotation sur ladite broche (521) et
d) au moins un accéléromètre (700, 702) monté sur ladite broche (521) et qui détecte l'accélération induite sur ladite roue de charge (510) par des forces autres que les forces exercées par le bandage de roue (20) testé.

9. Roue de charge selon la revendication 8, qui comprend de plus un deuxième accéléromètre (702) monté sur ladite broche, ledit premier accéléromètre (700) étant situé à côté de l'axe de rotation défini par ladite broche (512) et ledit deuxième accéléromètre (702) étant situé sur une ligne diamétrale de ladite broche (512) .

10. Roue de charge selon la revendication 9, dans laquelle ledit premier accéléromètre (700) est situé dans un alésage axial (750) défini dans ladite broche (512).

11. Roue de charge selon la revendication 9 ou 10, dans laquelle ledit deuxième accéléromètre est situé dans un alésage (760) aligné sur ledit diamètre.
